# EUROPÄISCHE PATENTSCHRIFT

(11) **EP 1 371 163 B1**
(45) Veröffentlichungstag und Bekanntmachung des Hinweises auf die Patenterteilung: **04.01.2006**
(21) Anmeldenummer: 02729778.7
(22) Anmeldetag: 12.03.2002
(51) Int. Cl.: H04J 14/02

(54) **SELBSTHEILENDE RINGSTRUKTUR ZUR OPTISCHEN NACHRICHTENÜBERTRAGUNG IM WELLENLÄNGENMULTIPLEX UND ADD/DROP-MULTIPLEXER HIERFÜR**
SELF-HEALING RING STRUCTURE FOR THE OPTICAL TRANSMISSION OF INFORMATION BY WAVELENGTH DIVISION MULTIPLEXING AND CORRESPONDING ADD/DROP-MULTIPLEXER
STRUCTURE ANNULAIRE AUTOCICATRISANTE POUR LA TRANSMISSION DE MESSAGES OPTIQUE EN MULTIPLEXAGE A REPARTITION EN LONGUEUR D'ONDE ET MULTIPLEXEUR A INSERTION-EXTRACTION UTILISE A CET EFFET

(30) Priorität: 12.03.2001 DE 10112173; 03.04.2001 DE 10116558
(43) Veröffentlichungstag der Anmeldung: 17.12.2003
(73) Patentinhaber: Adva AG Optical Networking, 82152 Martinsried (DE)
(72) Erfinder: GROBE, Klaus, 30159 Hannover (DE)
(74) Vertreter: Eder, Eugen
(86) Internationale Anmeldenummer: PCT/DE2002/000879
(87) Internationale Veröffentlichungsnummer: WO 2002/073855

(56) Entgegenhaltungen:
- EP-A- 1 014 613
- EP-A- 1 075 105

## Beschreibung

Die Erfindung betrifft einen Add/Drop-Multiplexer für eine selbstheilende Ringstruktur zur optischen Nachrichtenübertragung im Wellenlängenmultiplex, bei der die Nachrichtenübertragung in einem Ring erfolgt, der durch wenigstens drei optische Add/Drop-Multiplexer gebildet wird, die jeweils über zwei Lichtwellenleiter verbunden sind.

In städtischen und regionalen Bereichen werden existierende SDH/SONET-Netze mehr und mehr durch transparente oder semi-transparente optische Netzwerke ersetzt. Derartige Netze müssen einen gewissen Grad von Fehlertoleranz aufweisen. Hierzu wurden selbstheilende Netzstrukturen entwickelt, die zumindest einen auftretenden Fehler tolerieren, beispielsweise die vollständige Unterbrechung der Ringstruktur an einer Stelle. Dies kann beispielsweise durch das Zerstören von Lichtwellenleiterkabelnd bei Erdarbeiten erfolgen.

Bei bekannten selbstheilenden Ringstrukturen, wie sie beispielsweise in der EP 1 014 613 A2 beschrieben sind, können die einzelnen Add/Drop-Multiplexer durch jeweils vier Lichtwellenleiter bzw. ein Haupt- und ein Protection-Kabel verbunden sein. Hiervon dient ein Lichtwellenleiterpaar zur Nachrichtenübertragung im optischen Wellenmultiplex, wobei jeweils ein Lichtwellenleiter zur Nachrichtenübertragung in einer Richtung dient. Wird beispielsweise bei Erdarbeiten dasjenige Lichtwellenleiterkabel zerstört, welches sämtliche der vier Lichtwellenleiter umfasst, bzw. werden das Haupt- und das Protection-Kabel zerstört, so kann in jedem der beiden dieser Fehlerstelle benachbarten Add/Drop-Multiplexer derjenige Verkehr, der über die gestörte Lichtwellenleiterverbindung übertragen werden sollte, auf das zweite Lichtwellenleiterpaar bzw. das Protection-Kabel aufgeschaltet werden und in der Gegenrichtung übertragen werden. Für diese Übertragung können durch das Verdoppeln der eigentlich erforderlichen Lichtwellenleiterverbindungen die selben Wellenlängen verwendet werden, mit denen die Nachrichten über die gestörte Verbindung übertragen werden sollten. Der Nachteil einer derartigen Struktur besteht darin, dass eine Verdopplung der Lichtwellenleiterverbindungen zwischen den einzelnen Netzknoten erforderlich ist. Bei bestehenden Netzen ist dies jedoch in Folge knapper Lichtwellenleiterresourcen häufig nicht möglich.

Bei einer anderen bekannten selbstheilenden Ringstruktur sind die einzelnen Netzknoten bzw. Add/Drop-Multiplexer nur durch jeweils zwei Lichtwellenleiter verbunden. Jeweils ein Lichtwellenleiter dient zur Übertragung eines Wellenlänge-Multiplexsignals in einer Richtung. Jeder Add/Drop-Multiplexer sendet das identische Wellenlängen-Multiplexsignal in beiden Richtungen. Der betreffende empfangende Netzknoten bzw. Add/Drop-Multiplexer wählt zwischen den beiden Möglichkeiten des empfangenen Signals aus. Hierdurch kann das Signal von einem Netzknoten zu einem anderen in jedem Fall auch dann übertragen werden, wenn der Ring an einer beliebigen Stelle unterbrochen ist oder eine bestimmte Wellenlänge des Multiplexsignals in der einen Richtung nicht mehr übertragen werden kann, beispielsweise weil das betreffende optische Sendeelement bzw. der betreffende Laser ausgefallen ist.

Nachteilig bei dieser Ringstruktur ist jedoch, dass die Übertragungskapazität der Lichtwellenleiter nur mit geringer Effizienz ausgenützt wird, da eine Wellenlänge vollständig belegt ist, auch wenn diese im Normalfall (kein Fehler bzw. keine Unterbrechung des Rings) nur zur Übertragung eines Signals zwischen zwei benachbarten Netzknoten erforderlich ist.

Eine ähnliche Ringstruktur ist aus der EP 1 075 05 A1 bekannt. Bei dieser Struktur sendet ein Knoten bzw. ein Add/Drop-Multiplexer das Signal für einen Link jedoch nicht von vornherein in beide Richtungen. Jeder Add/Drop-Multiplexer ist mit seiner Ost- und seiner Westseite mit jeweils einen Lichtwellenleiter verbunden, die einen äußeren und einen inneren Ring bilden. Zur Datenübertragung werden Lichtwellenlängen λ₁ bis λ_{N} auf beiden Ringen verwendet, die auf dem äußeren Ring entgegen dem Uhrzeigersinn und auf dem inneren Ring im Uhrzeigersinn übertragen werden. Eine Verkehrsbeziehung (Link) zwischen zwei Knoten wird hergestellt durch die Übertragung mit einer Wellenlänge λₓ auf dem äußeren Ring und einer Wellenlänge λ_{y} auf dem inneren Ring. Bei der Unterbrechung des Links werden nur die an dem betreffenden Link beteiligten Knoten umkonfiguriert und die Datenübertragung erfolgt in diesem Protection-Fall auf dem verbleibenden, nicht unterbrochenen Teil des Rings (Protection Path). Hierzu wird die Wellenlänge λₓ auf dem inneren Ring des Protection Path und die Wellenlänge λ_{y} auf dem äußeren Ring des Protection Path übertragen. Voraussetzung hierfür ist selbstverständlich, dass im Protection Path diese Wellenlängen nicht für weitere Links zwischen anderen Knoten verwendet werden. Das Umkonfigurieren der Knoten erfolgt mittels optischer Schalter, welche die entsprechenden optischen Pfade miteinander verbinden. Eine Umsetzung der Übertragungswellenlängen erfolgt nicht. Diese Struktur eignet sich auch nicht für den als Stand der Technik (Fig. 1 der EP 1 075 105 A1) in der EP 1 075 105 A1 angegebenen Stand der Technik, bei dem eine Rekonfiguration der Ringstruktur ausschließlich durch eine Rekonfiguration der der Unterbrechungsstelle benachbarten Knoten bzw. Add/Drop-Multiplexer erreichbar ist.

Der Erfindung liegt ausgehend von diesem Stand der Technik die Aufgabe zugrunde, einen Add/Drop-Multiplexer für eine Ringstruktur zur optischen Nachrichtenübertragung im Wellenlängenmultiplex zu schaffen, welcher einfach und kostengünstig aufgebaut ist und mit dem eine ausreichende Selbstheilungsfähigkeit (Protection) der Ringstruktur gewährleistet werden kann, auch wenn diese lediglich zwei Lichtwellenleiterverbindungen zwischen zwei benachbarten Netzknoten aufweist.

Die Erfindung löst diese Aufgabe mit den Merkmalen des Patentanspruchs 1.

Die Erfindung sieht vor, dass zwischen den Netzknoten bzw. Add/Drop-Multiplexern eine bidirektionale Nachrichtenübertragung durch die Verwendung eines Wellenlängen-Multiplexsignals mit N voneinander verschiedenen Nutz-Wellenlängen erfolgt. Die Selbstheilungsfähigkeit wird dadurch erreicht, dass in den Add/Drop-Multiplexern M voneinander verschiedene (und auch gegenüber den Nutz-Wellenlängen verschiedene) Protection-Wellenlängen erzeugt werden können. Im Fall einer Unterbrechung der Übertragungsstrecken zwischen zwei Add/Drop-Multiplexern ersetzen die jeweils dieser Unterbrechung benachbarten Add/Drop-Multiplexer diejenigen optischen Teilsignale des gesamten optischen Wellenlängen-Multiplexsignal, die mit den jeweiligen Nutz-Wellenlängen über die Unterbrechungsstelle übertragen werden sollten, durch entsprechende Teilsignale mit jeweils einer Protection-Wellenlänge in der jeweils entgegengesetzten Richtung. Die Anzahl der Nutz-Wellenlängen kann gleich der Anzahl der Protection-Wellenlängen sein. Auch wenn diese Bedingung nicht erfüllt sein sollte, erweist es sich als vorteilhaft, wenn jede Protection-Wellenlänge einer bestimmten Nutz-Wellenlänge zugeordnet ist. Diese Zuordnung kann durch das Vorsehen fester optischer Pfade in den Add/Drop-Multiplexern starr vorgegeben oder aber durch das Vorsehen von lösbaren Lichtwellenleiterverbindungen, z.B. in Form von Patch-Kabeln, flexibel sein.

Bei der bevorzugten Ausführungsform der Ringstruktur finden Add/Drop-Multiplexer Anwendung, bei denen in beiden möglichen Senderichtungen identische Nutz-Wellenlängen benutzt werden. Hierdurch ergibt sich eine optimale Ausnutzung der zur Verfügung stehenden Bandbreite der Lichtwellenleiter.

Um ein möglichst einfaches Management der Ringstruktur zu gewährleisten, wird nach der Erfindung ein Signal mit einer Protection-Wellenlänge in jedem Fall über den nichtgestörten Teil der Ringstruktur bis zu dem der Unterbrechungsstelle benachbarten Add/Drop-Multiplexer übertragen und von diesem in ein entsprechendes Signal mit der ursprünglichen Nutz-Wellenlänge umgesetzt, welches in der entgegengesetzten Richtung an den Ziel-Netzknoten bzw. Ziel-Add/Drop-Multiplexer übertragen wird.

Durch diese Maßnahme muss bei Auftreten eines Fehlers lediglich das Verhalten derjenigen Add/Drop-Multiplexer verändert werden, die auf beiden Seiten der gestörten Übertragungsstrecke liegen.

Die Add/Drop-Multiplexer können so ausgebildet sein, dass der Protection-Mechanismus für vorbestimmbare Nutz-Wellenlängen deaktivierbar ist. Dies ist dann erforderlich, wenn das an einen Add/Drop-Multiplexer angeschlossene Equipment bereits seinerseits eine Protection-Fähigkeit für eine oder mehrere vorbestimmte Wellenlängen aufweist. Ansonsten bestünde in diesem Fall die Gefahr, dass sich die beiden, gegebenenfalls unterschiedlichen Protection-Mechanismen gegenseitig stören.

Bei dem Add/Drop-Multiplexer nach der Erfindung findet eine Protection-Transpondereinheit Verwendung, welche ihr zugeführte optische Signale bei jeweils einer Nutz-Wellenlänge in entsprechende optische Signale jeweils einer Protection-Wellenlänge umsetzt. Dabei ist eine Steuereinheit vorgesehen, welche Störungen in einem oder mehreren Signalübertragungswegen für Nutz-Wellenlängen aktiv detektiert oder der ein entsprechendes Fehlersignal zuführbar ist und welche bei Vorliegen einer Störung eine oder mehrere optische Schaltereinheiten (ggf. selektiv) so ansteuert, dass die betreffenden Signale der Protection-Transpondereinheit zugeführt werden.

Nach der Erfindung ist im Add/Drop-Multiplexer eine erste steuerbare Schaltereinheit vorgesehen, welche vorzugsweise eine der Anzahl der zu schaltenden optischen Signale entsprechende Anzahl von optischen Umschaltern umfasst und welche die optischen Add-Signale einer ersten Transceivereinheit und ein oder mehrere Passthrough-Signale entweder der ersten Multiplexer/Demultiplexer-Einheit (Normalbetrieb) oder der Protection-Transpondereinheit (Protection-Betrieb) zuführt.

Der Add/Drop-Multiplexer nach der Erfindung weist auch eine zweite steuerbare Schaltereinheit auf, welche vorzugsweise eine der Anzahl der zu schaltenden optischen Signale entsprechende Anzahl von optischen Umschaltern umfasst und welche die optischen Add-Signale der zweiten Transceivereinheit und ein oder mehrere optische Passthrough-Signale entweder der zweiten Multiplexer/Demultiplexer-Einheit (Normalbetrieb) oder der Protection-Transpondereinheit (Protection-Betrieb) zuführt.

Die optischen Ausgänge der ersten und zweiten steuerbaren Schaltereinheit können über eine Koppeleinheit mit den optischen Eingängen der Protection-Transpondereinheit verbunden sein. Die Koppeleinheit kann als optische Schaltereinheit, welche vorzugsweise eine der Anzahl der zu koppelnden optischen Signale entsprechend Anzahl von optischen Umschaltern umfasst, oder als optische 2x1-Koppeleinheit, welche vorzugsweise eine der Anzahl der zu koppelnden optischen Signale entsprechende Anzahl von optischen 2x1-Kopplern umfasst, ausgebildet sein.

In einer Weiterbildung der Erfindung können die optischen Ausgänge der Protection-Transpondereinheit mit einer dritten steuerbaren optischen Schaltereinheit verbunden sein, welche vorzugsweise eine der Anzahl der zu koppelnden optischen Signale entsprechende Anzahl von optischen Umschaltern umfasst und welche die optischen Ausgangssignale der Protection-Transpondereinheit entweder der ersten oder der zweiten Multiplexer/Demultiplexer-Einheit zuführt.

Die von der ersten Multiplexer/Demultiplexer-Einheit demultiplexten optischen Signale können einem ersten Eingang einer vierten steuerbaren optischen Schaltereinheit zugeführt sein, welche vorzugsweise eine der Anzahl der zu schaltenden optischen Signale entsprechende Anzahl von optischen Umschaltern umfasst und welche einen Teil der optischen Signale als optische Drop-Signale der ersten Transceivereinheit und den verbleibenden Teil der optischen Signale als Passthrough-Signale dem Eingang der zweiten Schaltereinheit zuführt.

An dieser Stelle sei darauf hingewiesen, dass unter einem Eingang oder Ausgang einer optischen Schaltereinheit innerhalb des Add/Drop-Multiplexers immer eine Mehrzahl von einzelnen Eingängen oder Ausgängen verstanden wird, wobei jeder einzelne Eingang oder Ausgang, vorzugsweise mittels eines einzigen optischen Umschalters schaltbar ist.

Die von der zweiten Multiplexer/Demultiplexer-Einheit gedemultiplexten optischen Signale können einem ersten Eingang einer fünften steuerbaren optischen Schaltereinheit zugeführt sein, welche vorzugsweise eine der Anzahl der zu schaltenden optischen Signale entsprechende Anzahl von optischen Umschaltern umfasst und welche einen Teil der optischen Signale als optische Drop-Signale der zweiten Transceivereinheit und den verbleibenden Teil der optischen Signale als Passthrough-Signale dem Eingang der ersten Schaltereinheit zuführt.

Nach der bevorzugten Ausführungsform der Erfindung ist in jedem Add/Drop-Multiplexer eine Nutz-Wellenlängen-Transpondereinheit vorgesehen, welche eine Koppeleinheit umfasst, der an einem ersten Eingang die von einer ersten Multiplexer/Demultiplexer-Einheit gedemultiplexten Signale mit Protection-Wellenlängen und der an einem zweiten Eingang die von einer zweiten Multiplexer/Demultiplexer-Einheit gedemultiplexten Signale mit Protection-Wellenlängen zugeführt sind. Die Nutz-Wellenlängen-Transpondereinheit setzt zumindest oder ausschließliche die als Passthrough-Signale zu behandelnden Signale bei Protection-Wellenlängen in entsprechende Signale mit Nutz-Wellenlängen um. Sämtliche optischen Ausgangssignale der Nutz-Wellenlängen-Transpondereinheit werden mittels einer sechsten steuerbaren Schaltereinheit, welche vorzugsweise eine der Anzahl der zu schaltenden optischen Signale entsprechende Anzahl von optischen Umschaltern umfasst, entweder einem zweiten Eingang der vierten Schaltereinheit oder einem zweiten Eingang der fünften Schaltereinheit zugeführt.

Auf diese Weise wird das vorstehend erläuterte Rückübersetzen von Protection-Wellenlängen in Nutz-Wellenlängen durchgeführt, das erforderlich ist, wenn lediglich die zwei einer gestörten Übertragungsstrecke benachbarten Add/Drop-Multiplexer im Fehlerfall entsprechend geswitched werden.

Die Koppeleinheit der Nutz-Wellenlängen-Transpondereinheit kann als optische Schaltereinheit ausgebildet sein, welche vorzugsweise eine der Anzahl der zu koppelnden optischen Signale entsprechende Anzahl von optischen Umschaltern umfasst, oder als optische 2x1-Koppeleinheit, welche vorzugsweise eine der Anzahl der zu koppelnden optischen Signale entsprechende Anzahl von optischen 2x 1-Kopplern umfasst.

In einer Ausführungsform der Erfindung können die von der ersten und/oder zweiten Multiplexer/Demultiplexer-Einheit zu multiplexenden optischen Signale von einer ersten und/oder zweiten Nutz-Wellenlängen-Transpondereinheit erzeugt werden, deren optische Ausgänge unmittelbar mit den optischen Eingängen der betreffenden Multiplexer/Demultiplexer-Einheit verbunden sind. Die erste und/oder zweite Nutz-Wellenlängen-Transpondereinheit kann so ausgebildet sein, dass das Vorhandensein der optischen Ausgangssignale bzw. ein ausreichender Sendepegel detektierbar ist. Dies kann beispielsweise über entsprechende Monitordioden erfolgen. Bei Detektieren eines Fehlers übermittelt die erste und/oder zweite Nutz-Wellenlängen-Transpondereinheit ein Fehlersignal an die Steuereinheit. Als Reaktion hierauf kann die Steuereinheit die steuerbaren optischen Schaltereinheiten selektiv so ansteuern, dass für die fehlenden optischen Signale mit Nutz-Wellenlängen jeweils ein optisches Signal mit einer Protection-Wellenlänge der ersten oder zweiten Multiplexer/Demultiplexer-Einheit zugeführt wird.

Nach einer Ausführungsform der Erfindung kann eine siebte steuerbare optische Schaltereinheit (38) vorgesehen sein, welche vorzugsweise eine der Anzahl der zu schaltenden optischen Signale entsprechende Anzahl von optischen Umschaltern umfasst und welcher eingangsseitig die von der zweiten Multiplexer/Demultiplexereinheit gedemultiplexten optischen Signale mit Protection-Wellenlängen (λ₁ₚ bis λ_{Mp}) zugeführt sind. Der eine Ausgang der siebten Schaltereinheit (38) ist mit einem Eingang einer achten optischen Schaltereinheit (40) verbunden, welche vorzugsweise eine der Anzahl der zu schaltenden optischen Signale entsprechende Anzahl von optischen Umschaltern umfasst und welche mit ihrem Ausgang mit der ersten Multiplexer/Demultiplexereinheit (15) verbunden ist. Der andere Ausgang der siebten Schaltereinheit (38) ist mit einem Eingang der Nutz-Wellenlängen-Transpondereinheit (37) verbunden. Dem anderen Eingang der achten Schaltereinheit (40) sind die Ausgangssignale der Protection-Transpondereinheit (23) zugeführt.

In gleicher Weise kann eine neunte steuerbare optische Schaltereinheit (42) vorgesehen sein, welche vorzugsweise eine der Anzahl der zu schaltenden optischen Signale entsprechende Anzahl von optischen Umschaltern umfasst und welcher eingangsseitig die von der ersten Multiplexer/Demultiplexereinheit (15) gedemultiplexten optischen Signale mit Protection-Wellenlängen (λ₁ₚ bis λ_{Mp}) zugeführt sind. Der eine Ausgang der neunten Schaltereinheit (42) ist mit einem Eingang einer zehnten optischen Schaltereinheit (44) verbunden, welche vorzugsweise eine der Anzahl der zu schaltenden optischen Signale entsprechende Anzahl von optischen Umschaltem umfasst und welche mit ihrem Ausgang mit der zweiten Multiplexer/Demultiplexereinheit (17) verbunden ist. Der andere Ausgang der neunten Schaltereinheit (42) ist mit einem Eingang der Nutz-Wellenlängen-Transpondereinheit (37) verbunden. Dem anderen Eingang der zehnten Schaltereinheit (44) sind die Ausgangssignale der Protection-Transpondereinheit (23) zugeführt.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: schematische Darstellungen einer aus vier Verkehrsknoten bestehenden selbstheilenden Ringstruktur nach der Erfindung im fehlerfreien Fall (Fig. 1a) und im Fall einer vollständigen Leitungsunterbrechung zwischen zwei Verkehrsknoten (Fig. 1b);
- Fig. 2: eine erste Ausführungsform eines Add/Drop-Multiplexers nach der Erfindung und
- Fig. 3: eine zweite Ausführungsform eines erfindungsgemäßen Add/Drop-Multiplexers.

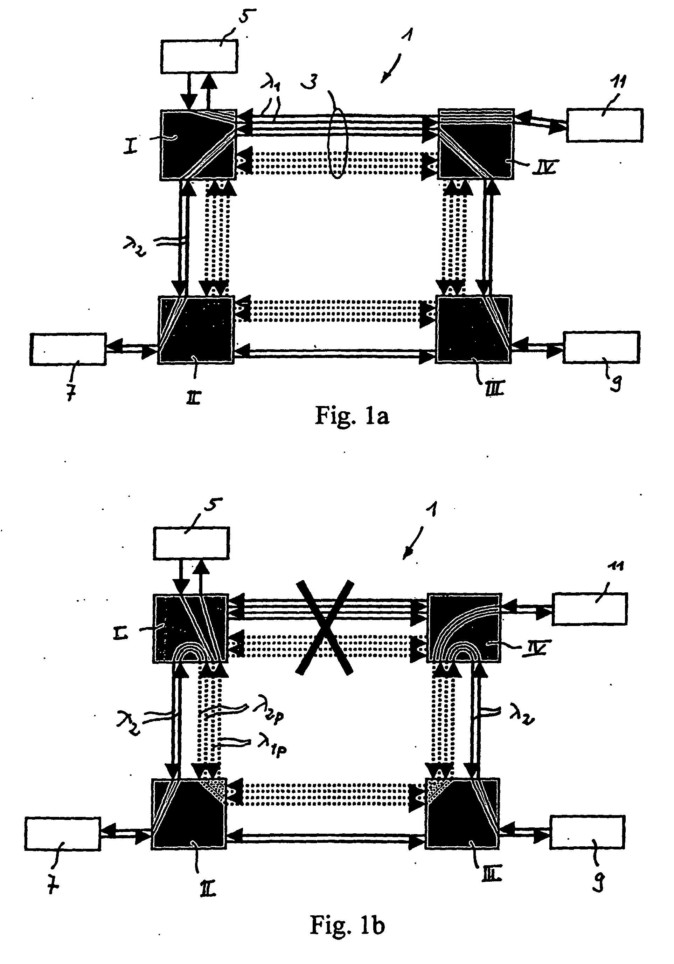

Die in Fig. 1a dargestellte selbstheilende Ringstruktur 1 besteht aus vier Verkehrsknoten I bis IV, welche über jeweils ein Lichtwellenleiterpaar 3 ringförmig verbunden sind. Aus Gründen der Einfachheit ist jeder Verkehrsknoten in Fig. 1a so ausgebildet, dass an jedem Knoten nur eine einzige Client-Einheit 5, 7, 9 und 11 angeschlossen ist. Jede Client-Einheit führt dem betreffenden Verkehrsknoten, der durch einen optischen Add/Drop-Multiplexer gebildet ist, ein optisches Signal zu, welches zu einem anderen Verkehrsknoten bzw. einer damit verbundenen Client-Einheit übertragen werden soll. In gleicher Weise empfängt jede Client-Einheit ein entsprechendes optisches Signal von dem betreffenden anderen Verkehrsknoten bzw. der damit verbundenen Client-Einheit, so dass sich zwischen jeweils zwei Client-Einheiten eine bidirektionale Verkehrsbeziehung ergibt. Im dargestellten Ausführungsbeispiel ist die am Verkehrsknoten I angeschlossene Client-Einheit 5 bidirektional mit der am Verkehrsknoten IV verbundenen Client-Einheit 11 verbunden. In entsprechender Weise ist die am Verkehrsknoten II angeschlossene Client-Einheit 7 mit der am Verkehrsknoten III angeschlossenen Client-Einheit 9 verbunden. Der Begriff Client-Einheit umfasst dabei sämtliche beliebigen Einheiten, die dem betreffenden Verkehrsknoten bzw. Add/Drop-Multiplexer ein optisches oder elektrisches Signal (je nach Ausbildung der Schnittstelle im Add/Drop-Multiplexer) zuführen können. Hierbei kann es sich auch bereits um ein optisches Wellenlängen-Multiplex-Signal handeln, so dass zwischen zwei eine Verkehrsbeziehung unterhaltende Client-Einheiten eine Übertragung auf mehreren Wellenlängen-Kanälen erfolgen kann.

Die Zuordnung der Verkehrsbeziehungen zu den das Lichtwellenleiterpaar 3 bildenden Lichtwellenleitern erfolgt vorzugsweise derart, dass ein Lichtwellenleiter nur Signale in einer Richtung überträgt und der jeweils andere Lichtwellenleiter Signale in der Gegenrichtung. Auf diese Weise werden Probleme mit Reflexionen vermieden, die bei der Verwendung derselben Wellenlänge in beiden Richtungen auf einem Lichtwellenleiter zu einer Beeinträchtigung der Überttagungsqualität führen können.

Der Einfachheit halber sei angenommen, dass die Signale der Client-Einheiten 5 und 11 innerhalb der Ringstruktur 1 in beiden Richtungen mit den Nutz-Wellenlängen λ₁ und die Signale der Client-Einheiten 7 und 9 mit den Nutz-Wellenlängen λ₂ übertragen werden. Diese Signale sind in den Figuren 1a und 1b durchgezogen dargestellt.

Während in Fig. 1a der ungestörte Betriebsfall dargestellt ist, wird im Folgenden anhand Fig. 1b der Betriebsfall bei einer vollständigen Unterbrechung der Verkehrsbeziehungen zwischen den Knoten I und IV erläutert.

Der in Fig. 1b dargestellte Fall kann in der Praxis beispielsweise dadurch entstehen, dass bei Erdarbeiten ein Lichtwellenleiterkabel vollständig zerstört wird, in dem beide Lichtwellenleiter, die die Verkehrsknoten I und IV verbinden, enthalten sind.

Dieser Fehlerfall kann in den Verkehrsknoten dadurch detektiert werden, dass ein entsprechender Detektor, beispielsweise ein optisches Empfangselement den Fall "Loss of Light" detektiert. In den der Fehlerstelle benachbarten Verkehrsknoten werden dann durch das Auslösen entsprechender Schaltvorgänge diejenigen Signale mit Nutz-Wellenlängen, die im ungestörten Fall über die Fehlerstelle hinweg zu übertragen sind, durch entsprechende Signale auf Protection-Wellenlängen im ungestörten Teil der ringförmigen Struktur 1 ersetzt. Im dargestellten Fall muss somit das WellenlängenMultiplex-Signal, welches die Teilsignale mit den Nutz-Wellenlängen λ₁ und λ₂ umfasst, jeweils durch ein entsprechendes Multiplexsignal bei Protection-Wellenlängen λ₁ₚ und λ₂ₚ ersetzt werden. Hierzu müssen ganz allgemein so viele Protection-Wellenlängen vorgesehen werden, wie im Fehlerfall entsprechende Nutz-Wellenlängen ersetzt werden müssen.

Selbstverständlich dürfen die Protection-Wellenlängen nicht mit den Nutz-Wellenlängen übereinstimmen, da die optischen Teilsignale mit den Protection-Wellenlängen auf ein und demselben Lichtwellenleiter übertragen werden müssen, auf dem gegebenenfalls bereits ein Nutzsignal mit entsprechenden Nutz-Wellenlänge übertragen wird.

Ganz allgemein setzt sich das auf einem Lichtwellenleiter übertragene Multiplexsignal somit aus einem (Teil-) Multiplexsignal mit M Protection-Wellenlängen und einem (Teil-) Multiplexsignal mit N Nutz-Wellenlängen zusammen.

Bei dem in Fig. 1 dargestellten Fall wird in den Verkehrsknoten I und IV bzw. den betreffenden Add/Drop-Multiplexern der Fehler detektiert. Daraufhin wird im Verkehrsknoten I ein Schaltvorgang ausgelöst, der bewirkt, dass anstelle des Signals mit der Wellenlänge λ₁ in direkter Richtung auf den Verkehrsknoten IV ein Protection-Signal mit der Protection-Wellenlänge λ₁ₚ in der Gegenrichtung gesendet wird. Die Protection-Signale sind in Fig. 1b punktiert dargestellt.

Das vom Verkehrsknoten I gesendete Protection-Signal mit der Wellenlänge λ₁ₚ wird von den Verkehrsknoten II und III als Passthrough-Signal durchgeschleift und vom Verkehrsknoten IV empfangen. Der Verkehrsknoten IV, der den Fehler ebenfalls detektiert hat, erkennt, dass der Client-Einheit 11 anstelle des im fehlerfreien Fall erwarteten Signals mit der Wellenlänge λ₁ das Protection-Signal mit der Wellenlänge λ₁ₚ zugeführt werden muss. Ein Umsetzen der Wellenlänge ist hier in der Regel nicht erforderlich, da optische Empfangselemente in der Praxis eine breite Empfangscharakteristik aufweisen.

In gleicher Weise wird vom Verkehrsknoten IV anstelle eines direkt zum Verkehrsknoten I gesendeten Signals mit der Wellenlänge λ₁ ein Protection-Signal mit der Wellenlänge λ₁ₚ in umgekehrter Richtung zum Verkehrsknoten I gesandt.

Auf diese Weise wird die gestörte direkte Übertragung zwischen den Verkehrsknoten I und IV durch eine Übertragung bei der Protection-Wellenlänge λ₁ₚ über die Verkehrsknoten II und III ersetzt.

Die Signalübertragung zwischen den Client-Einheiten 7 und 9 wird auf analoge Weise durchgeführt. Anstelle eines Signals über den in Fig. 1a dargestellten Weg wird das Signal der Wellenlänge λ₂ vom Verkehrsknoten I in ein Signal der Protection-Wellenlänge λ₂ₚ umgesetzt und über den Verkehrsknoten II und den Verkehrsknoten III dem Verkehrsknoten IV zugeführt. Der Verkehrsknoten IV setzt das empfangene Signal der Protection-Wellenlänge λ₂ₚ wieder in ein entsprechendes Signal mit der Nutz-Wellenlänge λ₂ um und führt dieses dem Verkehrsknoten III zu, der das empfangene Signal der Client-Einheit 9 zuleitet. Die Übertragung von der Client-Einheit 9 über Client-Einheit 7 erfolgt in umgekehrter Weise.

Das Zuführen der einzelnen Signale bis zu den Verkehrsknoten I bzw. IV, die der eigentlichen Fehlerstelle benachbart sind, bringt den Vorteil mit sich, dass lediglich in diesen, der Fehlerstelle benachbarten Verkehrsknoten entsprechende Schaltvorgänge ausgelöst werden müssen. Die übrigen Verkehrsknoten verbleiben in ihrer Grundstellung und müssen daher keine Kenntnis vom Ort und der Beschaffenheit der Fehlerstelle haben. Sie müssen lediglich so ausgelegt sein, dass entsprechende Protection-Signale durchgeschleift werden können. Insgesamt betrachtet ergibt sich hierdurch ein sehr einfaches Management für die selbstheilende Ringstruktur, da lediglich die einer Fehlerstelle benachbarten Verkehrsknoten in geeigneter Weise reagieren müssen.

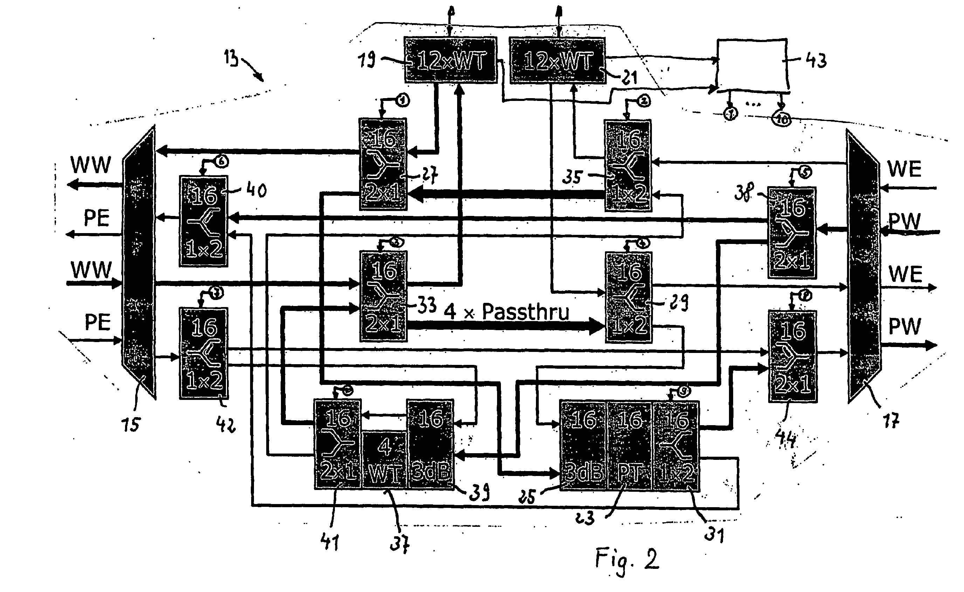

Fig. 2 zeigt einen Add/Drop-Multiplexer 13, mit dem eine vorstehend erläuterte selbstheilende Ringstruktur realisiert werden kann. Der Add/Drop-Multiplexer umfasst zwei Multiplexer/Demultiplexer-Einheiten 15, 17, welche jeweils ein ankommendes optisches Wellenlängen-Multiplexsignal in die einzelnen optischen Teilsignale bei den entsprechenden (Nutz- und Protection-) Wellenlängen demultiplexen bzw. welche ihr zugeführte optische Teilsignale vorbestimmter (Nutz- und Protection-) Wellenlängen zu einem optischen Wellenlänge-Multiplexsignal multiplexen. Entsprechende Multiplexer können z.B. als AWG's (Arrayed Waveguide Gratings) ausgebildet sein.

Des Weiteren umfasst die Multiplexer/Demultiplexer-Einheit 13 eine Transceivereinheit 19 für die West-Seite und eine weitere Transceivereinheit 21 für die Ost-Seite des Add/Drop-Multiplexers. Die Transceivereinheiten 19, 21 erzeugen im dargestellten Ausführungsbeispiel jeweils 12 optische Teilsignale mit vorbestimmten, unterschiedlichen Nutz-Wellenlängen λ₁ bis λ₁₂. In gleicher Weise sind die Transceivereinheiten 19, 21 dafür ausgelegt, 12 optische Signale mit den Nutz-Wellenlängen λ₁ bis λ₁₂ zu empfangen. In den Transceivem 19, 21 kann eine Umwandlung in elektrische Signale und eine entsprechende Signalaufbereitung und/oder Signalverarbeitung erfolgen.

Der Begriff Transceiver soll dabei auch reine Signal-Transponder umfassen, in denen lediglich eine Umsetzung optischer Signale erfolgt, beispielsweise von einer Wellenlänge auf eine andere, bzw. von breitbandigen optischen Eingangssignalen (in Richtung zum Add/Drop-Multiplexer) auf optische schmalbandige Signale. Den Transceivern 19, 21 können somit elektrische oder optische Signale von maximal 12 unterschiedlichen Client-Einheiten zugeführt werden, denen jeweils ein (Wellenlängen-) Kanal zugeordnet werden kann.

Der Add/Drop-Multiplexer gemäß Fig. 2 umfasst des Weiteren eine Protection-Transpondereinheit 23, die, im dargestellten Ausführungsbeispiel, maximal 16 optische Signale mit Nutz-Wellenlängen λ₁ bis λ₁₆ in entsprechende optische Signale mit Protection-Wellenlängen λ₁ₚ bis λ₁₆ₚ umsetzt. Der Protection-Transpondereinheit 23 ist eine Koppeleinheit 25 vorgeschaltet, die zwei optische Eingänge zu einem einzigen Ausgang zusammenfasst, welcher mit dem Eingang der Protection-Transpondereinheit verbunden ist. Dabei besteht jeder Eingang und jeder Ausgang aus insgesamt 16 Teileingängen bzw. Teilausgängen, wobei jeweils zwei Teileingänge zu einem optischen Teilausgang zusammengefasst werden. Die Koppeleinheit 25 kann beispielsweise aus 16 einzelnen optischen 2x1-Kopplern bestehen. Koppelverluste von jeweils 3 dB sind hierbei akzeptabel, da die empfangene optische Leistung durch die nachgeschaltete Protection-Transpondereinheit ohnehin verstärkt wird. Selbstverständlich kann die Koppeleinheit 25 jedoch auch als optische Schaltereinheit ausgebildet sein, welche eine entsprechende Anzahl von optischen Umschaltern aufweist. Jeder Umschalter schaltet dabei jeweils einen der beiden korrespondierenden 16 optischen Teileingänge auf den betreffenden optischen Teilausgang.

Die Eingänge der Koppeleinheit 25 sind jeweils mit optischen Ausgängen von Schaltereinheiten 27 bzw. 29 verbunden, welche wiederum 16 einzelne optische Schalter aufweisen, die als Umschalter ausgebildet sind. Den Schaltereinheiten 27, 29 sind jeweils die maximal 12 optischen Sendesignale der Transceivereinheiten 19 bzw. 21 zugeführt. Darüber hinaus sind den Schaltereinheiten 27, 29 jeweils vier weitere optische Passthrough-Signale zugeführt. Die optischen Schaltereinheiten 27, 29 schalten daher die maximal 16 ihr zugeführten optischen Signale entweder auf die Multiplexer/Demultiplexer-Einheit 15 bzw. 17 oder auf den Eingang der Koppeleinheit 25.

Der Protection-Transpondereinheit 23 ist eine weitere optische Schaltereinheit 31 nachgeschaltet, die wiederum 16 einzelne optische Umschalter umfassen kann. Der optische Eingang der Schaltereinheit 31 ist auf diese Weise mit einem der beiden optischen Ausgänge (die Ein- und Ausgänge bestehen wiederum aus 16 einzelnen Teilein- bzw. - ausgängen) verbindbar. Der eine optische Ausgang ist dabei mit der westseitigen und der andere optische Ausgang mit ostseitigen Multiplexer/Demultiplexer-Einheit verbunden.

Die Verbindung erfolgt jeweils über eine Schaltereinheit 40 bzw. 44, die wiederum 16 einzelne optische Umschalter umfassen können, wobei der optische Ausgang der Schaltereinheit 31 mit jeweils einem von zwei Eingängen der Schaltereinheit 40 bzw. 44 verbunden ist.

Darüber hinaus umfasst der Add/Drop-Multiplexer 13 zwei weitere optische Schaltereinheiten 33, 35, welche wiederum aus 16 einzelnen optischen Umschaltern bestehen können. Die optischen Schaltereinheiten 33, 35 weisen jeweils zwei optische Eingänge bzw. zwei Sätze von jeweils 16 optischen Teileingängen auf, wobei der eine Satz von 16 optischen Teileingängen mit den optischen Pfaden verbunden ist, denen die betreffende optische Multiplexer/Demultiplexer-Einheit 15 bzw. 17 die gedemultiplexten optischen Signale mit den 16 Nutz-Wellenlängen λ₁ bis λ₁₆ zuführt.

Jeweils 12 Pfade des optischen Ausgangs der optischen Schaltereinheiten 33, 35 sind der betreffenden Transceivereinheit 19 bzw. 21 zugeführt. Die verbleibenden optischen Signale mit den Nutz-Wellenlängen λ₁₃ bis λ₁₆ werden auf jeweils vier optischen Pfaden als Passthrough-Signale dem Eingang bzw. den betreffenden vier Teileingängen der optischen Schaltereinheiten 27, 29 zugeführt.

Schließlich umfasst der Add/Drop-Multiplexer 13 eine Nutz-Wellenlängen-Transpondereinheit 37, welche im dargestellten Ausführungsbeispiel insgesamt vier Protection-Signale mit entsprechenden Protection-Wellenlängen λ₁ₚ bis λ₁₆ in vier entsprechende Signale mit Nutz-Wellenlängen λ₁₃ bis λ₁₆ umsetzen kann.

Die Nutz-Wellenlängen-Transpondereinheit 37 umfasst eingangsseitig eine Koppeleinheit 39, die wiederum zwei Eingänge aufweist. Dem einen Eingang sind die 16 von der Multiplexer/Demultiplexer-Einheit 15 gedemultiplexten Teilsignale mit Protection-Wellenlängen λ₁ₚ bis λ₁₆ zuführbar und dem anderen Eingang die von der Multiplexer/Demultiplexer-Einheit 17 gedemultiplexten optischen Protection-Signale mit den Protection-Wellenlängen λ₁ₚ bis λ₁₆ₚ. Das Zuführen der Signale mit Protection-Wellenlängen erfolgt jeweils über weitere steuerbare optische Schaltereinheiten 38 bzw. 42, wobei den Schaltereinheiten 38 bzw. 42 eingangsseitig von der Multiplexer/Demultiplexereinheit 17 bzw. 15 jeweils die gedemultiplexten Signale mit Protection-Wellenlängen zugeführt sind. Die Schaltereinheiten 38, 42 umfassen vorzugsweise 16 einzelne steuerbare optische Schalter. Die jeweils anderen Ausgänge der Schaltereinheiten 38 bzw. 40 sind mit weiteren Eingängen der Schaltereinheiten 40 bzw. 44 verbunden. Auf diese Weise können Protection-Signale durch den Add/Drop-Multiplexer, abgesehen von einer geringen Signaldämpfung, unverändert durchgeschleift werden.

Ausgangsseitig weist die Nutz-Wellenlängen-Transpondereinheit 37 eine weitere optische Schaltereinheit 41 auf, welche die 12 optischen Teilsignale mit Protection-Wellenlängen und die vier optischen Teilsignale, die auf Nutz-Wellenlängen umgesetzt wurden, entweder dem zweiten Eingang der Schaltereinheit 33 oder dem zweiten Eingang der Schaltereinheit 35 zuführt.

Schließlich umfasst der Add/Drop-Multiplexer 13 eine Steuereinheit 43, welche die optischen Schaltereinheiten 27, 29, 33, 35, 31 und 41, wie nachstehend erläutert, ansteuert.

Im Folgenden wird die Funktionsweise des Add/Drop-Multiplexers nach Fig. 2 näher erläutert:

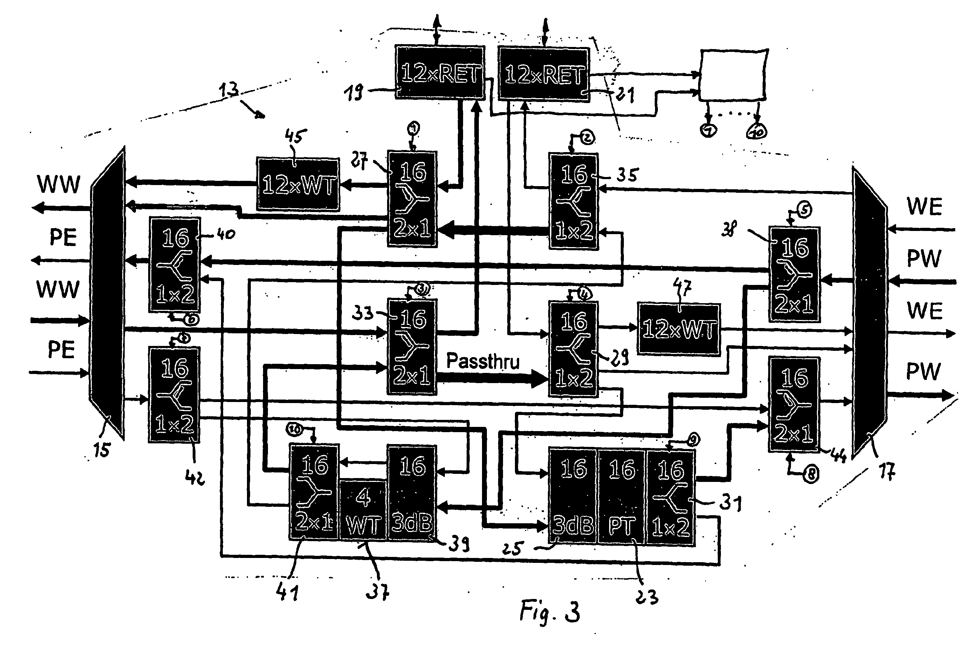

Detektiert die Steuereinheit 43 keinen Fehler innerhalb oder außerhalb des Add/Drop-Multiplexers, beispielsweise durch Abfrage der ihr zugeführten Signale der Transceivereinheiten 19, 21, ob auf einer Seite des Add/Drop-Multiplexers ein "Loss of Light" vorliegt, so steuert die Steuereinheit 43 die steuerbaren optischen Schaltereinheiten 27, 29, 33, 35, 31 und 41 in den Normalzustand (dieser ist in den Fig. 2 und 3 durch die Doppelstriche in den Schaltersymbolen angedeutet). In diesem wird das von Westen empfangene und gedemultiplexten Nutzsignal mit den Nutz-Wellenlängen λ₁ bis λ₁₆ der Schaltereinheit 33 zugeführt. Von den 16 Empfangssignalen werden 12 Signale als Drop-Signale der Transceivereinheit 19 zugeführt und die verbleibenden vier Signale als Passthrough-Signale der Schaltereinheit 29. Die Schaltereinheit 29 erhält an ihrem Eingang des Weiteren die 12 Add-Signale von der Transceivereinheit 21. Über den Ausgang der Schaltereinheit 29 werden die insgesamt 16 Signale mit Nutz-Wellenlängen λ₁ bis λ₁₆ der ostseitigen Multiplexer/Demultiplexer-Einheit 17 zugeführt. Diese multiplext die 16 optischen Signale zu einem optischen Wellenlänge-Multiplexsignal, welches in ostseitiger Richtung dem betreffenden Lichtwellenleiter zugeführt wird. In gleicher Weise wird das von Osten empfangene optische Wellenlängen-Multiplexsignal von der Multiplexer/Demultiplexer-Einheit 17 gedemultiplext und der optischen Schaltereinheit 35 zugeführt. Diese führt wiederum 12 Signale als Drop-Signale der Transceivereinheit 21 zu. Die verbleibenden vier Signale mit Nutz-Wellenlängen werden als Passthrough-Signale der optischen Schaltereinheit 27 zugeführt. Dem optischen Eingang dieser Schaltereinheit 27 werden des Weiteren von der Transceivereinheit 19 12 optische Signale mit Nutz-Wellenlängen als Add-Signale zugeführt. In der normalen Arbeitsweise des Add/Drop-Multiplexers führt die Schaltereinheit 27 die an ihrem Eingang anliegenden 16 optischen Signale der optischen Multiplexer/Demultiplexer-Einheit 15 zu, welche diese zu einem optischen Wellenlängen-Multiplexsignal multiplext und dem betreffenden Lichtwellenleiter als abgehendes Nutzsignal WW zuführt.

Falls an einer Stelle im Ring, welcher der Add/Drop-Multiplexer 13 nicht benachbart ist, eine Unterbrechung vorliegt, so erhält dieser von der Westseite ein Protection-Signal PE. Dieses wird üblicherweise in demselben Lichtwellenleiter geführt, in dem auch das ankommende Nutzsignal WW geführt wird. In diesem Fall wird dem optischen Multiplexer/Demultiplexer 15 somit ein optisches Wellenlänge-Multiplex-Signal zugeführt, das maximal 16 Teilsignale mit Nutz-Wellenlängen und 16 Teilsignale mit Protection-Wellenlängen umfasst.

Nach dem Demultiplexen der optischen Signale mit Protection-Wellenlängen werden diese der Koppeleinheit 39 und der Nutz-Wellenlängen-Transpondereinheit 37 zugeführt. Die durch den Add/Drop-Multiplexer 13 durchzuschleifenden Signale mit Protection-Wellenlängen werden von der Multiplexer/Demultiplexer-Einheit 15 gedemultiplext und der steuerbaren optischen Schaltereinheit 42 eingangsseitig zugeführt. Im Normalbetrieb des Add/Drop-Multiplexers 13 ist die Schalterstellung der einzelnen Schalter der Schaltereinheit 42 so gewählt, dass die Teilsignale mit den Protection-Wellenlängen λ₁ₚ bis λ₁₆ₚ dem entsprechenden Eingang der optischen Schaltereinheit 44 zugeführt werden. Durch eine entsprechende Ansteuerung der Schaltereinheit 44 im Normalbetrieb des Add/Drop-Multiplexers 13 werden die Protecdon-Signale der Multiplexer/Demultiplexer-Einheit 17 zugeführt, von dieser gemultiplext und als abgehendes Protection-Multiplexsignal PW dem betreffenden Ost-seitigen Lichtwellenleiter zugeführt.

In gleicher Weise wird das der Multiplexer/Demultiplexer 17 zugeführte Protection-Signal PW im Normalbetrieb des Add/Drop-Multiplexers durchgeschleift. Die gedemultiplexten Teilsignale werden der Schaltereinheit 38 zugeführt, die im Normalbetrieb so geschaltet ist, dass die Teilsignale dem betreffenden Eingang der Schaltereinheit 40 zugeführt werden. Die Schaltereinheit 40 ist im Normalbetrieb des Add/Drop-Multiplexers 13 so geschaltet, dass die gedemultiplexten Teilsignale der Multiplex/Demultiplex-Einheit 15 zugeführt werden. Das gedemultiplexten Protection-Signal PE wird westseitig dem betreffenden Lichtwellenleiter zugeführt.

Im Folgenden wird nunmehr das Verhalten des Add/Drop-Multiplexers 13 bei einer ostseitigen Unterbrechung der Übertragungsstrecken näher beschrieben:

Das westseitig zugeführte Nutz-Signal WW wird nach dem Demultiplexen der optischen Schaltereinheit zugeführt, die in die Stellung wie im Normalbetrieb gesteuert ist. Die zu droppenden Signale werden der Transceivereinheit 19 zugeführt. Die vier Passthrough-Signale werden zusammen mit den Add-Signalen, die von der Transceivereinheit 21 erzeugt werden, der Schaltereinheit 29 zugeführt. Da die Steuereinheit 43 einen "Loss of Light" auf der Ostseite festgestellt hat, steuert diese die Schaltereinheit 29 in die zweite Schalterstellung "Fehler Ost", wodurch die 16 Teilsignale der Koppeleinheit 25 und damit der Protection-Transpondereinheit 23 zugeführt werden. Die betreffenden Teilsignale werden somit auf betreffende Protection-Wellenlängen umgesetzt. Die so erzeugten Protection-Signale werden der Schaltereinheit 31 zugeführt, die von der Steuereinheit 43 so angesteuert wird, dass die Teilsignale über den betreffenden Ausgang der Schaltereinheit 40 zugeführt werden.

Auch die Schaltereinheit 40 wird von der Steuereinheit 43 aus der Stellung "Normalbetrieb" in die Stellung "Fehler Ost" gesteuert, so dass die Protection-Teilsignale der Multiplex/Demultiplex-Einheit 15 zugeführt und von dieser gemultiplext und als Protection-Multiplexsignal PE dem betreffenden westseitigen Lichtwellenleiter zugeführt werden.

Da bei einer ostseidgen Unterbrechung der Übertragungsstrecken von dem Add/Drop-Multiplexer auf der anderen Seite der Unterbrechung ebenfalls Protection-Signale erzeugt werden, erhält der gerade betrachtete Add/Drop-Multiplexer ein westseitig ankommendes Protection-Signal PE. Dieses wird wiederum von der Multiplexer/Demultiplexer-Einheit 15 gedemultiplext und der Schaltereinheit 42 zugeführt. Diese wird von der Steuereinheit 43 in die Stellung "Fehler Ost" gesteuert, wodurch die betreffenden Protection-Teilsignale der Nutz-Wellenlängen-Transpondereinheit 37 zugeführt werden. Wie bereits erläutert, werden von der Nutz-Wellenlängen-Transpondereinheit 37 nur die vier Protection-Teilsignale auf Nutz-Wellenlängen umgesetzt, die im Add/Drop-Multiplexer 13 nicht gedroppt werden. Sämtliche optischen Teilsignale werden durch eine entsprechende Ansteuerung der Schaltereinheit 41 der Nutz-Wellenlängen-Transpondereinheit 37 der Schaltereinheit 35 zugeführt. Diese wird von der Steuereinheit 43 in die Schaltstellung "Fehler Ost" gesteuert. Entsprechend werden die zu droppenden Teilsignale der Transceivereinheit 21 zugeführt. Wie bereits erläutert, ist hier eine Umsetzung der Protection-Wellenlängen nicht erforderlich, da die optischen Empfangselemente entsprechend breitbandig ausgebildet sind. Die auf Nutz-Wellenlängen umgesetzten optischen Teilsignale gelangen als Passthrough-Signale zur Schaltereinheit 27 und werden von dieser zusammen mit den 12 Add-Signalen, die von der Transceivereinheit 19 erzeugt werden, der Multiplex/Demultiplex-Einheit 15 zugeführt. Die Schaltereinheit 27 ist hierzu von der Steuereinheit 43 nach wie vor in die Schaltstellung "Normalbetrieb" gesteuert. Die Teilsignale werden wiederum von der Multiplex/Demultiplex-Einheit 15 gemultiplext und als Multiplexsignal WW dem betreffenden westseitigen Lichtwellenleiter zugeführt.

Das Verhalten des Add/Drop-Multiplexers 13 bei einer westseitigen Unterbrechung ergibt sich analog: Das der Multiplex/Demultiplex-Einheit zugeführte Nutz-Signal WE wird gedemultiplext und der Schaltereinheit 35 zugeführt. Diese befindet sich in der Schaltstellung "Normalbetrieb". Die Drop-Signale werden der Transceivereinheit 21 zugeführt. Die vier Passthrough-Signale gelangen zusammen mit den von der Transceivereinheit 19 erzeugten Add-Signalen zum Eingang der Schaltereinheit 27. Diese ist von der Steuereinheit 43 in die Schaltstellung "Fehler West" gesteuert. Demzufolge gelangen die Teilsignale zum betreffenden Eingang der Koppeleinheit 25 und damit zur Protection-Transpondereinheit 23. Die auf Protection-Wellenlängen umgesetzten Teilsignale werden durch eine Ansteuerung der Schaltereinheit 31 in die Stellung "Fehler West" der Schaltereinheit 44 zugeführt. Die Schaltereinheit 44 wird von der Steuereinheit 43 in die Schaltstellung "Fehler West" gesteuert, so dass die Teilsignale der Multiplexer/Demultiplexer-Einheit 17 zugeführt, von dieser gemultiplext und als Protection-Multiplexsignal PW dem entsprechenden ostseitigen Lichtwellenleiter zugeführt werden.

Das auf der Ostseite ankommende Protection-Multiplexsignal PW wird von der Multiplex/Demultiplex-Einheit 17 gedemultiplext und der Schaltereinheit 38 zugeführt.

Diese wird von der Steuereinheit 43 in die Stellung "Fehler West" gesteuert, so dass die Teilsignale bei Protection-Wellenlängen dem betreffenden Eingang der Nutz-Wellenlängen-Transpondereinheit 37 zugeführt werden. Deren Schaltereinheit 41 ist von der Steuereinheit 43 in die Schaltstellung "Fehler West" gesteuert, so dass die optischen Teilsignale, von denen 12 nach wie vor die Protection-Wellenlängen aufweisen und vier auf Nutz-Wellenlängen umgesetzt wurden, zur Schaltereinheit 33 gelangen. Diese befindet sich, angesteuert von der Steuereinheit 43, ebenfalls in der Schaltstellung "Fehler West", so dass die 12 Drop-Signale der Transceivereinheit 19 und die vier umgesetzten Teilsignale als Passthrough-Signale der Schalteinheit 29 zugeführt werden. Zusammen mit den 12 von der Transceivereinheit 21 erzeugten Add-Signalen gelangen diese über die Schaltereinheit 29 zur Multiplex/Demultiplex-Einheit 17, wobei die Schaltereinheit 29 hierzu von der Steuereinheit 23 in die Schaltstellung "Fehler West" gesteuert wird. Nach dem Multiplexen werden die Teilsignale als Multiplexsignal WE dem betreffenden ostseitigen Lichtwellenleiter zugeführt.

Neben einer vollständigen Unterbrechung von Übertragungsstrecken können mit dem in Fig. 2 dargestellten Add/Drop-Multiplexer auch solche Fehler "protected" werden, die nur den Ausfall einzelner Verkehrsbeziehungen bei einzelnen Nutz-Wellenlängen betreffen. Fällt beispielsweise ein optisches Sendeelement in einer Transceivereinheit 21 aus, so kann dies von der empfangenden Transceivereinheit detektiert und der betreffende Fehler an die Steuereinheit 43 gemeldet werden. Diese kann dann in der vorstehend erläuterten Weise die betreffenden Schaltereinheiten so ansteuern, dass nur die eine Wellenlänge in eine betreffende Protection-Wellenlänge umgesetzt wird. Hierzu muss die Steuereinheit 43 die betreffenden Schaltereinheiten lediglich selektiv so ansteuern, dass die dem betreffenden optischen Pfad zugeordneten Schalterelemente der Schaltereinheiten in die erforderliche Schaltstellung gelangen.

Der Aufbau der in Fig. 3 dargestellten weiteren Ausführungsform eines Add/Drop-Multiplexers 13 entspricht weitestgehend dem Aufbau in Fig. 2. Die Transceivereinheiten 19, 21 beinhalten hier jedoch kostengünstige Sendeelemente, z.B. kostengünstige breitbandige Laser. Die Transceivereinheiten 19, 21 können auch als einfache Receive-End-Transponder ausgebildet sein, die lediglich eine definierte optische Schnittstelle für den Anschluss einer entsprechenden Anzahl von Clients darstellen. Die dennoch erforderlichen schmalbandigen optischen Sendeelemente sind bei dieser Ausführungsform in Nutz-Wellenlängen-Transpondern 45 bzw. 47 enthalten, denen jeweils die optischen Signale (Add-Signale) der Transceivereinheiten 19 bzw. 21 über die Schaltereinheiten 27 bzw. 29 zugeführt sind, wenn sich die Schaltereinheiten 27 bzw. 29 in der Schaltstellung "Normalbetrieb" befinden. Diese Struktur weist den Vorteil auf, dass zwischen dem Ausgang der schmalbandigen optischen Sendeelemente und dem betreffenden Lichtwellenleiter kein Schaltelement angeordnet ist. Hierdurch werden unnötige Dämpfungsverluste vermieden. Des Weiteren ergibt sich eine höhere Sicherheit, da bei Ausfall eines der leistungsstärkeren schmalbandigen optischen Sendeelemente in den Nutz-Wellenlängen-Trahspondereinheiten 45 bzw. 47 das betreffende Signal durch ein Protection-Signal ersetzt werden kann. Der Ausfall eines optischen Sendeelements kann dabei entweder durch eine entsprechende Detektoreinrichtung, z.B. eine Monitordiode, im Add/Drop-Multiplexer selbst detektiert werden oder durch den Erhalt eines Signals von einem benachbarten Add/Drop-Multiplexer (beispielsweise entsprechend dem Alarm-Indicator-Signal bei einer SDH-Struktur), in dem der Ausfall einer bestimmten Empfangswellenlänge detektiert wird.

## Patentansprüche

1. Add/Drop-Multiplexer (13) für eine Ringstruktur zur optischen Nachrichtenübertragung im Wellenlängenmultiplex,
a) mit einer ersten, West-Seite (15) und einer zweiten Ost-Seite, (17) optischen Multiplexer/Demultiplexer-Einheit, welche jeweils mit zwei Lichtwellenheitern verbindbar ist, über die der Add/Drop-Multiplexer mit jeweils zwei benackbarten Add/Drop-Multiplexern zu einer Ringstruktur verbunden ist, und welche derart ausgebildet sind, ein ihnen auf einem der Lichtwellenleiter zugeführtes optisches Wellenlängen-Multiplexsignal mit maximal N+M optischen Teilsignalen zu demultiplexen und maximal N+M ihnen zugeführte optische Teilsignale zu einem optischen Wellenlängen-Multiplexsignal zu multiplexen,
b) mit einer ersten Transceivereinheit, West-Seite, (19) für das Senden von einer vorbestimmten Anzahl von Add-Signalen bei jeweils einer Nutz-Wellenlänge (λ₁ bis λ_{N}) und das Empfangen einer vorbestimmten Anzahl von Drop-Signalen mit jeweils einer Nutzwellenlänge (λ₁ bis λ_{N}) oder Protection-Wellenlänge (λ₁ₚ bis λ_{Mp}),
c) mit einer zweiten Transceivereinheit Ost-Seite, (21) für das Senden von einer vorbestimmten Anzahl von Add-Signalen mit jeweils einer Nutz-Wellenlänge (λ₁ bis λ_{N}) und das Empfangen einer vorbestimmten Anzahl von Drop-Signalen mit jeweils einer Nutz- oder Protection-Wellenlänge und
d) mit einer Steuereinheit (43), welche derart ausgebildet ist, Störungen in einem oder mehreren Signalübertragungswegen für Nutz-Wellenlängen zu detektieren oder welcher ein entsprechendes Fehlersignal zuführbar ist und welche derart ausgebildet ist, im Fehlerfall eine Rekonfiguration des Add/Drop-Multiplexers durchzuführen,
**dadurch gekennzeichnet**,
e) dass die Steuereinheit (43) derart ausgebildet ist, bei einer Störung einen oder mehrere optische Schalter (27, 29, 40, 44) so auzustern, dass die betreffenden Signale mit Nutz-Wellenlängen (λ₁ bis λ_{N}) einer Protection-Transpondereinheit (23) zugeführt und die entsprechenden auf vorbestimmte Protection-Wellenlängen (λ₁ₚ bis λ_{Mp}) umgesetzte Signale der jeweils anderen der ersten (15) oder zweiten (17) optischen Multiplexer/Demultiplexer-Einheit zugeführt werden,
f) wobei die Steuereinheit derart ausgebildet ist, das Umsetzen der Signale von Nutz-Wellenlängen (λ₁ bis λ_{N}) auf Protection-Wellenlängen (λ₁ₚ bis λ_{Mp}) ausschließlich dann durchzuführen wenn eine Störung in einem oder mehreren Signalübertragungswegen zwischen dem Add/Drop-Multiplexer (13) und einem in der Ringstruktur unmittelbar benachbarten Add/Drop-Multiplexer vorliegt,
g) dass eine erste steuerbare optische Schaltereinheit (27) vorgesehen ist, welche so ausgebildet und angeordnet ist und welche von der Steuereinheit (43) so angesteuert wird, dass bei einer westseitigen Unterbrechung die betreffenden optischen Add-Signale der ersten Transceivereinheit (19) und ein oder mehrere optische Passthrough-Signale der Protection-Transpondereinheit (23) zugeführt und andernfalls der ersten Multiplexer/Demultiplexer-Einheit (15) zugeführt werden,
h) dass eine zweite steuerbare optische Schaltereinheit (29) vorgesehen ist, welche so ausgebildet und angeordnet ist und welche von der Steuereinheit (43) so angesteuert wird, dass bei einer ostseitigen Unterbrechung die betreffenden optischen Add-Signale der zweiten Transceivereinheit (21) und ein oder mehrere optische Passthrough-Signale der Protection-Transpondereinheit (23) zugeführt und andernfalls der zweiten Multiplexer/Demultiplexer-Einheit (17) zugeführt werden, und
i) dass die optischen Ausgänge der Protection-Transpondereinheit (23) mit einer dritten steuerbaren optischen Schaltereinheit (31) verbunden sind, welche von der Steuereinheit (43) so angesteuert wird, dass die betreffenden optischen Ausgangssignale der Protection-Transpondereinheit (23) bei einer ostseitigen Unterbrechung der ersten Multiplexer/Demultiplexer-Einheit (15) und bei einer westseitigen Unterbrechung der zweiten (17) Multiplexer/Demultiplexer-Einheit zugeführt werden.

2. Add/Drop-Multiplexer nach einem der einem der vorhergehenden Ansprüche, **dadurch gekennzeichnet, dass** die optischen Ausgänge der ersten (27) und zweiten (29) Schaltereinheit über eine Koppeleinheit (25) mit den optischen Eingängen der Protection-Transpondereinheit (23) verbunden sind, wobei die Koppeleinheit (25) als optische Schaltereinheit, welche vorzugsweise eine der Anzahl der zu koppelnden optischen Signale entsprechende Anzahl von optischen Umschaltern umfasst, oder als optische 2x1-Koppeleinheit, welche vorzugsweise eine der Anzahl der zu koppelnden optischen Signale entsprechende Anzahl von optischen 2x1-Kopplern umfasst, ausgebildet ist.

3. Add/Drop-Multiplexer nach einem der einem der vorhergehenden Ansprüche, **dadurch gekennzeichnet, dass** die von der ersten Multiplexer/Demultiplexer-Einheit (15) gedemultiplexten optischen Signale mit Nutz-Wellenlängen (λ₁ bis λ_{N}) einem ersten Eingang einer vierten steuerbaren optischen Schaltereinheit (33) zugeführt sind, welche derart ausgebildet ist, einen Teil der optischen Signale als optischen Drop-Signale der ersten Transceivereinheit (19) und den verbleibenden Teil der optischen Signale als Passthrough-Signale dem Eingang der zweiten Schaltereinheit (29) zuzuführen.

4. Add/Drop-Multiplexer nach Anspruch 3, **dadurch gekennzeichnet, dass** die von der zweiten Multiplexer/Demultiplexer-Einheit (17) gedemultiplexten optischen Signale mit Nutz-Wellenlängen (λ₁ bis λ_{N}) einem ersten Eingang einer fünften steuerbaren optischen Schaltereinheit (35) zugeführt sind, welche derart ausgebildet ist, einen Teil der optischen Signale als optischen Drop-Signale der zweiten Transceivereinheit (21) und den verbleibenden Teil der optischen Signale als Passthrough-Signale dem Eingang der ersten Schaltereinheit (27) zuzuführen.

5. Add/Drop-Multiplexer nach Anspruch 4, **dadurch gekennzeichnet, dass** eine Nutz-Wellenlängen-Transpondereinheit (37) vorgesehen ist, welche eine Koppeleinheit (39) umfasst, der an einem ersten Eingang die von der ersten Multiplexer/Demultiplexer-Einheit (15) gedemultiplexten Signale mit Protection-Wellenlängen (λ₁ₚ bis λ_{Mp}) und der an einem zweiten Eingang die von der zweiten Multiplexer/Demultiplexer-Einheit (17) gedemultiplexten Signale mit Protection-Wellenlängen (λ₁ₚ bis λ_{Mp}) zugeführt sind, wobei die Nutz-Wellenlängen-Transpondereinheit (37) derart ausgebildet ist, zumindest oder ausschließlich die als Passthrough-Signale zu behandelnden Signale bei Protection-Wellenlängen (λ₁ₚ bis λ_{Mp}) in entsprechende Signale mit Nutz-Wellenlängen (λ₁ bis λ_{N}) umzusetzen und sämtliche optischen Ausgangssignale mittels einer sechsten steuerbaren Schaltereinheit (41), welche vorzugsweise eine der Anzahl der zu schaltenden optischen Signale entsprechende Anzahl von optischen Umschaltern umfasst, entweder einem zweiten Eingang der vierten Schaltereinheit (33) oder einem zweiten Eingang der fünften Schaltereinheit (35) zuzuführen.

6. Add/Drop-Multiplexer nach Anspruch 5, **dadurch gekennzeichnet, dass** die Koppeleinheit (39) als optische Schaltereinheit oder als optische 2x1-Koppeleinheit ausgebildet ist.

7. Add/Drop-Multiplexer nach Anspruch 6, **dadurch gekennzeichnet, dass** die Koppeleinheit (39) als optische Schaltereinheit, welche eine der Anzahl der zu koppelnden optischen Signale entsprechende Anzahl von optischen Umschaltern umfasst, oder als optische 2x1-Koppeleinheit, welche eine der Anzahl der zu koppelnden optischen Signale entsprechende Anzahl von optischen 2x1-Kopplern umfasst, ausgebildet ist

8. Add/Drop-Multiplexer nach einem der Ansprüche 5 bis 7, **dadurch gekennzeichnet, dass** eine siebte steuerbare optische Schaltereinheit (38) vorgesehen ist, welcher eingangsseitig die von der zweiten Multiplexer/Demultiplexereinheit (17) gedemultiplexten optischen Signale mit Protection-Wellenlängen (λ₁ₚ bis λ_{Mp}) zugeführt sind, wobei der eine Ausgang der siebten Schaltereinheit (38) mit einem Eingang einer achten optischen Schaltereinheit (40) verbunden ist, welche mit ihrem Ausgang mit der ersten Multiplexer/Demultiplexereinheit (15) verbunden ist, und wobei der andere Ausgang der siebten Schaltereinheit (38) mit einem Eingang der Nutz-Wellenlängen-Transpondereinheit (37) verbunden oder verbindbar ist und wobei einem anderen Eingang der achten Schaltereinheit (40) die Ausgangssignale der Protection-Transpondereinheit (23) zugeführt sind.

9. Add/Drop-Multiplexer nach einem der Ansprüche 5 bis 8, **dadurch gekennzeichnet, dass** eine neunte steuerbare optische Schaltereinheit (42) vorgesehen ist, welcher eingangsseitig die von der ersten Multiplexer/Demultiplexereinheit (15) gedemultiplexten optischen Signale mit Protection-Wellenlängen (λ₁ₚ bis λ_{Mp}) zugeführt sind, wobei der eine Ausgang der neunten Schaltereinheit (42) mit einem Eingang einer zehnten optischen Schaltereinheit (44) verbunden ist, welche mit ihrem Ausgang mit der zweiten Multiplexer/Demultiplexereinheit (17) verbunden ist, und wobei der andere Ausgang der neunten Schaltereinheit (42) mit einem Eingang der Nutz-Wellenlängen-Transpondereinheit (37) verbunden oder verbindbar ist und wobei einem anderen Eingang der zehnten Schaltereinheit (44) die Ausgangssignale der Protection-Transpondereinheit (23) zugeführt sind.

10. Add/Drop-Multiplexer nach einem der vorhergehenden Ansprüche, **dadurch gekennzeichnet, dass** die von der ersten (15) und/oder zweiten (17) Multiplexer/Demultiplexer-Einheit zu multiplexenden optischen Signale mit Nutz-Wellenlängen (λ₁ bis λ_{N}) von einer ersten (45) und/oder zweiten (47) Nutz-Wellenlängen-Transpondereinheit erzeugt werden, deren optischen Ausgänge unmittelbar mit den optischen Eingängen der betreffenden Multiplexer/Demulliplexer-Einheit (15, 17) verbunden sind, und dass die Steuereinheit derart ausgebildet ist, (43) bei Ausfall eines oder mehrerer optischer Sendeelemente der ersten (45) und/oder zweiten (47) Nutz-Wellenlängen-Transpondereinheit die steuerbaren optischen Schaltereinheiten (27, 31, 44; 29, 31, 40) selektiv so auzusterern, dass für die fehlenden optischen Signale mit Nutz-Wellenlängen (λ₁ bis λ_{N}) jeweils ein optisches Signal mit einer Protection-Wellenlänge (λ_{Ip} bis λ_{Mp}) der ersten (15) oder zweiten (17) Multiplexer/Demultiplexer-Einheit zugeführt wird.

11. Add/Drop-Multiplexer nach Anspruch 10, **dadurch gekennzeichnet, dass** die erste (45) und/oder zweite (47) Nutz-Wellenlängen-Transpondereinheit derart ausgebildet ist, das Vorhandensein der optischen Ausgangssignale zu detektieren und im Fehlerfall ein Fehlersignal an die Steuereinheit (43) zu übermittelten.

12. Add/Drop-Multiplexer nach Anspruch 10 oder 11, **dadurch gekennzeichnet, dass** die optischen Sendeelemente der ersten (19) und zweiten (21) Transceivereinheit als kostengünstige optische Sendeelemente, vorzugsweise breitbandige Laser ausgebildet sind.

13. Add/Drop-Multiplexer nach Anspruch 12, **dadurch gekennzeichnet, dass** die optischen Sendeelemente der ersten (1a) und zweiten (21) Transceivereinheit mit geringerer Leistung betrieben werden als die optisehen Sendeelemente der ersten (45) und/oder zweiten (47) Nutz-Wellenlängen-Transpondereinheit.

## Claims

1. Add/drop multiplexer (13) for a ring structure for the optical transmission of information by wavelength division multiplexing,
a) having a first, west side, optical multiplexer/demultiplexer unit (15) and a second, east side, optical multiplexer/demultiplexer unit (17), each of which respectively is connectable to two optical waveguides, via which the add/drop multiplexer is connected to respectively two adjacent add/drop multiplexers to form a ring structure, and said optical multiplexer/demultiplexer units being designed to demultiplex an optical wavelength multiplex signal, having maximally N+M optical partial signals, supplied to them on one of the optical waveguides, and to multiplex maximally N+M optical partial signals supplied to them, to form one optical wavelength multiplex signal,
b) having a first transceiver unit, west side, (19) for transmitting a predetermined number of add signals with a respective useful wavelength (λ₁ to λ_{N}) and receiving a predetermined number of drop signals having a respective useful wavelength (λ₁ to λ_{N}) or protection wavelength (λ₁ₚ to λ_{Mp}),
c) having a second transceiver unit, east side, (21) for transmitting a predetermined number of add signals having a respective useful wavelength (λ₁ to λ_{N}) and receiving a predetermined number of drop signals having a respective useful or protection wavelength, and
d) having a control unit (43) which is designed to detect disturbances in one or more signal transmission paths for useful wavelengths, or to which a corresponding error signal can be supplied, and which is designed to perform a reconfiguration of the add/drop multiplexer in the event of an error,
**characterized in that**
e) the control unit (43) is designed, in the event of a disturbance, to activate one or more optical switches (27, 29, 40, 44) in such a way that the respective signals having useful wavelengths (λ₁ to λ_{N}) are supplied to a protection transponder unit (23), and the corresponding signals, converted to predetermined protection wavelengths (λ₁ₚ to λ_{Mp}), are supplied to the respectively other of the first (15) or second (17) optical multiplexer/demultiplexer units,
f) the control unit being designed to perform the conversion of the signals from useful wavelengths (λ₁ to λ_{N}) to protection wavelengths (λ₁ₚ to λ_{Mp}) only if there is a disturbance in one or more signal transmission paths between the add/drop multiplexer (13) and an add/drop multiplexer that is immediately adjacent in the ring structure,
g) there is provided a first controllable optical switch unit (27), which is so designed and disposed, and is so activated by the control unit (43) that, in the case of a west-side interruption, the respective optical add signals are supplied to the first transceiver unit (19) and one or more optical passthrough signals are supplied to the protection transponder unit (23), and are otherwise supplied to the first multiplexer/demultiplexer unit (15),
h) there is provided a second controllable optical switch unit (29), which is so designed and disposed, and is so activated by the control unit (43) that, in the case of an east-side interruption, the respective optical add signals are supplied to the second transceiver unit (21) and one or more optical passthrough signals are supplied to the protection transponder unit (23), and are otherwise supplied to the second multiplexer/demultiplexer unit (17),
i) the optical outputs of the protection transponder unit (23) are connected to a third controllable optical switch unit (31) which is so activated by the control unit (43) that the respective optical output signals of the protection transponder unit (23) are supplied to the first multiplexer/demultiplexer unit (15) in the case of an east-side interruption, and are supplied to the second multiplexer/demultiplexer unit (17) in the case of a west-side interruption.

2. Add/drop multiplexer according to any one of the preceding claims, **characterized in that** the optical outputs of the first (27) and second (29) switch unit are connected, via a coupling unit (25), to the optical inputs of the protection transponder unit (23), the coupling unit (25) being designed as an optical switch unit which preferably comprises a number of optical changeover switches corresponding to the number of optical signals to be coupled, or as an optical 2x1 coupling unit which preferably comprises a number of optical 2x1 couplers corresponding to the number of optical signals to be coupled.

3. Add/drop multiplexer according to any one of the preceding claims, **characterized in that** the optical signals, having useful wavelengths (λ₁ to λ_{N}), demultiplexed by the first multiplexer/demultiplexer unit (15) are supplied to a first input of a fourth controllable optical switch unit (33) which is designed to supply a portion of the optical signals, as optical drop signals, to the first transceiver unit (19), and to supply the remaining portion of the optical signals, as passthrough signals, to the input of the second switch unit (29).

4. Add/drop multiplexer according to claim 3, **characterized in that** the optical signals, having useful wavelengths (λ₁ to λ_{N}), demultiplexed by the second multiplexer/demultiplexer unit (17) are supplied to a first input of a fifth controllable optical switch unit (35) which is designed to supply a portion of the optical signals, as optical drop signals, to the second transceiver unit (21), and to supply the remaining portion of the optical signals, as passthrough signals, to the input of the first switch unit (27).

5. Add/drop multiplexer according to claim 4, **characterized in that** there is provided a useful-wavelength transponder unit (37) which comprises a coupling unit (39), to which are supplied, at a first input, the signals, having protection wavelengths (λ₁ₚ to λ_{Mp}), demultiplexed by the first multiplexer/demultiplexer unit (15), and to which coupling unit are supplied, at a second input, the signals, having protection wavelengths (λ₁ₚ to λ_{Mp}), demultiplexed by the second multiplexer/demultiplexer unit (17), the useful-wavelength transponder unit (37) being designed to convert, at least or exclusively, the signals with protection wavelengths (λ₁ₚ to λ_{Mp}) to be treated as passthrough signals into corresponding signals having useful wavelengths (λ₁ to λ_{N}), and to supply all optical output signals either to a second input of the fourth switch unit (33) or to a second input of the fifth switch unit (35) by means of a sixth controllable switch unit (41), which preferably comprises a number of optical changeover switches corresponding to the number of optical signals to be switched.

6. Add/drop multiplexer according to claim 5, **characterized in that** the coupling unit (39) is designed as an optical switch unit or as an optical 2x1 coupling unit.

7. Add/drop multiplexer according to claim 6, **characterized in that** the coupling unit (39) is designed as an optical switch unit which comprises a number of optical changeover switches corresponding to the number of optical signals to be coupled, or as an optical 2x1 coupling unit which comprises a number of optical 2x1 couplers corresponding to the number of optical signals to be coupled.

8. Add/drop multiplexer according to any one of claims 5 to 7, **characterized in that** there is provided a seventh controllable optical switch unit (38) to which are supplied, on the input side, the optical signals, having protection wavelengths (λ₁ₚ to λ_{Mp}), demultiplexed by the second multiplexer/demultiplexer unit (17), the one output of the seventh switch unit (38) being connected to an input of an eighth optical switch unit (40) which is connected, through its output, to the first multiplexer/demultiplexer unit (15), and the other output of the seventh switch unit (38) being connected or connectable to an input of the useful-wavelength transponder unit (37), and the output signals of the protection transponder unit (23) being supplied to another input of the eighth switch unit (40).

9. Add/drop multiplexer according to any one of claims 5 to 8, **characterized in that** there is provided a ninth controllable optical switch unit (42) to which are supplied, on the input side, the optical signals, having protection wavelengths (λ₁ₚ to λ_{Mp}), demultiplexed by the first multiplexer/demultiplexer unit (15), the one output of the ninth switch unit (42) being connected to an input of a tenth optical switch unit (44) which is connected, through its output, to the second multiplexer/demultiplexer unit (17), and the other output of the ninth switch unit (42) being connected or connectable to an input of the useful-wavelength transponder unit (37), and the output signals of the protection transponder unit (23) being supplied to another input of the tenth switch unit (44).

10. Add/drop multiplexer according to any one of the preceding claims, **characterized in that** the optical signals, having useful wavelengths (λ₁ to λ_{N}), to be multiplexed by the first (15) and/or second (17) multiplexer/demultiplexer unit are generated by a first (45) and/or second (47) useful-wavelength transponder unit whose optical outputs are directly connected to the optical inputs of the respective multiplexer/demultiplexer unit (15, 17), and the control unit (43) is so designed to selectively activate the controllable optical switch units (27, 31, 44; 29, 31, 40), in the event of failure of one or more optical transmission elements of the first (45) and/or second (47) useful-wavelength transponder unit, that, for the missing optical signals having useful wavelengths (λ₁ to λ_{N}), an optical signal having a protection wavelength (λ₁ₚ to λ_{Mp}) is respectively supplied to the first (15) or second (17) multiplexer/demultiplexer unit.

11. Add/drop multiplexer according to claim 10, **characterized in that** the first (45) and/or second (47) useful-wavelength transponder unit is designed to detect the presence of the optical output signals and to communicate an error signal to the control unit (43) in the event of an error.

12. Add/drop multiplexer according to either of claims 10 or 11, **characterized in that** the optical transmission elements of the first (19) and second (21) transceiver units are designed as inexpensive optical transmission elements, preferably broadband lasers.

13. Add/drop multiplexer according to claim 12, **characterized in that** the optical transmission elements of the first (19) and second (21) transceiver units are operated with a lesser output than the optical transmission elements of the first (45) and/or second (47) useful-wavelength transponder unit.

## Revendications

1. Multiplexeur à insertion/extraction (13) pour une structure annulaire pour la transmission optique de messages en multiplexage par répartition en longueur d'onde, comprenant
a) une première unité multiplexeur/démultiplexeur optique côté ouest (15) et une deuxième unité multiplexeur/démultiplexeur optique côté est (17) qui peuvent chacune être reliées à deux guides d'ondes optiques par lesquels le multiplexeur à insertion/extraction est relié à respectivement deux multiplexeurs à insertion/extraction voisin pour former une structure annulaire, et qui sont conçues pour démultiplexer un signal multiplexe optique par répartition en longueur d'onde qu'elles ont reçus sur un guide d'ondes optiques avec au maximum N+M signaux optiques partiels et pour multiplexer au maximum N+M signaux optiques partiels qu'elles ont reçus pour obtenir un signal multiplexe optique par répartition en longueur d'onde,
b) une première unité récepteur/émetteur côté ouest (19) pour l'émission d'un nombre prédéterminé de signaux d'insertion avec respectivement une longueur d'onde utile (λ₁ à λ_{N}) et la réception d'un nombre prédéterminé de signaux d'extraction avec respectivement une longueur d'onde utile (λ₁ à λ_{N}) ou une longueur d'onde de protection (λ_{1P} à λ_{MP}),
c) une deuxième unité récepteur/émetteur côté est (21) pour l'émission d'un nombre prédéterminé de signaux d'insertion avec respectivement une longueur d'onde utile (λ₁ à λ_{N}) et la réception d'un nombre prédéterminé de signaux d'extraction avec respectivement une longueur d'onde utile ou une longueur d'onde de protection,
d) une unité de commande (43) qui est conçue pour détecter des perturbations sur une ou plusieurs voies de transmission de signaux pour des longueurs d'onde utiles, ou qui peut recevoir un signal de défaut correspondant, et qui est conçue pour effectuer en cas de défaut une reconfiguration du multiplexeur à insertion/extraction,
**caractérisé en ce que**
e) l'unité de commande (43) est conçue pour commander en cas de défaut un ou plusieurs commutateurs optiques (27, 29, 40, 44) de telle sorte que les signaux concernés avec des longueurs d'onde utiles (λ₁ à λ_{N}) soient transmis à une unité transpondeur de protection (23) et que les signaux correspondants convertis sur des longueurs d'onde de protection (λ_{1P} à λ_{MP}) soient transmis à respectivement l'autre des première (15) ou deuxième (17) unités multiplexeur/démultiplexeur optiques,
f) l'unité de commande est conçue pour effectuer la conversion des signaux de longueurs d'onde utiles (λ1 à λN) en longueurs d'onde de protection (λ1P à λMP) exclusivement en présence d'une perturbation sur une ou plusieurs voies de transmission de signaux entre le multiplexeur à insertion/extraction (13) et un multiplexeur à insertion/extraction directement voisin dans la structure annulaire,
g) une première unité de commutation optique (27) commandable est prévue, laquelle est conçue, disposée et commandée par l'unité de commande (43) de telle sorte qu'en présence d'une coupure côté ouest les signaux optiques d'insertion concernés soient transmis à la première unité de récepteur/émetteur (19) et un ou plusieurs signaux optiques de passage soient transmis à l'unité transpondeur de protection (23) ou autrement transmis à la première unité multiplexeur/démultiplexeur (15),
h) une deuxième unité de commutation optique (29) commandable est prévue, laquelle est conçue, disposée et commandée par l'unité de commande (43) de telle sorte qu'en présence d'une coupure côté est les signaux optiques d'insertion concernés soient transmis à la deuxième unité de récepteur/émetteur (21) et un ou plusieurs signaux optiques de passage soient transmis à l'unité transpondeur de protection (23) ou autrement transmis à la deuxième unité multiplexeur/démultiplexeur (17),
i) les sorties optiques de l'unité transpondeur de protection (23) sont reliées à une troisième unité de commutation optique (31) commandable qui est commandée par l'unité de commande (43), de telle sorte que lors d'une coupure côté est les signaux optiques de sortie de l'unité transpondeur de protection (23) concernés soient transmis à la première unité multiplexeur/démultiplexeur (15) et lors d'une coupure côté ouest à la deuxième unité multiplexeur/démultiplexeur (17).

2. Multiplexeur à insertion/extraction selon l'une quelconque des revendications précédentes,
**caractérisé en ce que** les sorties optiques des première (27) et deuxième (29) unités de commutation sont reliées par une unité de couplage (25) aux entrées optiques de l'unité transpondeur de protection (23), l'unité de couplage (25) étant conçue comme unité de commutation optique qui comprend de préférence un nombre de commutateurs optiques correspondant au nombre des signaux optiques à coupler, ou comme unité de couplage optique 2x1 qui comprend de préférence un nombre de coupleurs optiques 2x1 correspondant au nombre des signaux optiques à coupler.

3. Multiplexeur à insertion/extraction selon l'une quelconque des revendications précédentes,
**caractérisé en ce que** les signaux optiques avec des longueurs d'onde utiles (λ₁ à λ_{N}) démultiplexés par la première unité multiplexeur/démultiplexeur (15) sont transmis sur une première entrée d'une quatrième unité de commutation optique (33) commandable, qui est conçue pour transmettre une partie des signaux optiques en tant que signaux d'insertion optiques à la première unité de récepteur/émetteur (19) et la partie restante des signaux optiques en tant que signaux de passage sur l'entrée de la deuxième unité de commutation (29).

4. Multiplexeur à insertion/extraction selon la revendication 3,
**caractérisé en ce que** les signaux optiques avec des longueurs d'onde utiles (λ₁ à λ_{N}) démultiplexés par la deuxième unité multiplexeur/démultiplexeur (17) sont transmis sur une première entrée d'une cinquième unité de commutation optique (35) commandable, qui est conçue pour transmettre une partie des signaux optiques en tant que signaux d'insertion optiques à la deuxième unité de récepteur/émetteur (21) et la partie restante des signaux optiques en tant que signaux de passage sur l'entrée de la première unité de commutation (27).

5. Multiplexeur à insertion/extraction selon la revendication 4,
**caractérisé en ce qu'**une unité transpondeur à longueurs d'onde utiles (37) est prévue, laquelle comprend une unité de couplage (39) qui reçoit sur une première entrée les signaux démultiplexés par la première unité multiplexeur/démultiplexeur (15) avec des longueurs d'onde de protection (λ_{P1} à λ_{MP}), et sur une deuxième entrée les signaux démultiplexés par la deuxième unité multiplexeur/démultiplexeur (17) avec des longueurs d'onde de protection (λ_{P1} à λ_{MP}), l'unité transpondeur à longueurs d'onde utiles (37) étant conçue pour convertir au moins ou exclusivement les signaux à traiter comme des signaux de passage avec des longueurs d'onde de protection (λ_{P1} à λ_{MP}) en signaux correspondants avec des longueurs d'onde utiles (λ₁ à λ_{N}), et pour transmettre tous les signaux de sortie optiques soit sur une deuxième entrée de la quatrième unité de commutation (33) soit sur une deuxième entrée de la cinquième unité de commutation (35), au moyen d'une sixième unité de commutation (41) commandable qui comprend de préférence un nombre de commutateurs optiques correspondant au nombre des signaux optiques à commuter.

6. Multiplexeur à insertion/extraction selon la revendication 5,
**caractérisé en ce que** l'unité de couplage (39) est conçue en tant qu'unité de commutation optique ou unité de couplage optique 2x1.

7. Multiplexeur à insertion/extraction selon la revendication 6,
**caractérisé en ce que** l'unité de couplage (39) est conçue en tant qu'unité de commutation optique qui comprend un nombre de commutateurs optiques correspondant au nombre des signaux optiques à coupler, ou en tant qu'unité de couplage optique 2x1 qui comprend un nombre de coupleurs optiques 2x1 correspondant au nombre des signaux optiques à coupler.

8. Multiplexeur à insertion/extraction selon l'une quelconque des revendications 5 à 7,
**caractérisé en ce qu'**une septième unité de commutation optique (38) commandable est prévue, recevant côté entrée les signaux optiques démultiplexés par la deuxième unité multiplexeur/démultiplexeur (17) avec des longueurs d'onde de protection (λ_{P1} à λ_{MP}), une sortie de la septième unité de commutation (38) étant reliée à une entrée d'une huitième unité de commutation optique (40) dont la sortie est reliée à la première unité multiplexeur/démultiplexeur (15), et l'autre sortie de la septième unité de commutation (38) est ou peut être reliée à une entrée de l'unité transpondeur à longueurs d'onde utiles (37), et une autre entrée de la huitième unité de commutation (40) reçoit les signaux de sortie de l'unité transpondeur de protection (23).

9. Multiplexeur à insertion/extraction selon l'une quelconque des revendications 5 à 8,
**caractérisé en ce qu'**une neuvième unité de commutation optique (42) commandable est prévue, recevant côté entrée les signaux optiques démultiplexés par la première unité multiplexeur/démultiplexeur (15) avec des longueurs d'onde de protection (λ_{P1} à λ_{MP}), une sortie de la neuvième unité de commutation (42) étant reliée à une entrée d'une dixième unité de commutation optique (44) dont la sortie est reliée à la deuxième unité multiplexeur/démultiplexeur (17), et l'autre sortie de la neuvième unité de commutation (42) étant ou pouvant être reliée à une entrée de l'unité transpondeur à longueurs d'onde utiles (37), et une autre entrée de la dixième unité de commutation (44) recevant les signaux de sortie de l'unité transpondeur de protection (23).

10. Multiplexeur à insertion/extraction selon l'une quelconque des revendications précédentes,
**caractérisé en ce que** les signaux optiques à multiplexer par la première (15) et/ou la deuxième (17) unité multiplexeur/démultiplexeur avec des longueurs d'onde utiles (λ₁ à λ_{N}) sont générés par une première (45) et/ou une deuxième (47) unité transpondeur à longueurs d'onde utiles dont les sorties optiques sont reliées directement aux entrées optiques de l'unité multiplexeur/démultiplexeur (15, 17) concernée, et l'unité de commande (43) est conçue, en cas de défaillance d'un ou de plusieurs éléments d'émission optiques de la première (45) et/ou de la deuxième (47) unité transpondeur à longueurs d'onde utiles, pour commander sélectivement les unités de commutation optiques (27, 31, 44 ; 29, 31, 40) de telle sorte que pour les signaux optiques manquants avec des longueurs d'onde utiles (λ₁ à λ_{N}) respectivement un signal optique avec une longueur d'onde de protection (λ_{P1} à λ_{MP}) est transmis à la première (15) ou la deuxième (17) unité multiplexeur/démultiplexeur.

11. Multiplexeur à insertion/extraction selon la revendication 10,
**caractérisé en ce que** la première (45) et/ou la deuxième (47) unité transpondeur à longueurs d'onde utiles est conçu pour détecter la présence des signaux de sortie optiques et en cas de défaut transmettre un signal de défaut à l'unité de commande (43).

12. Multiplexeur à insertion/extraction selon la revendication 10 ou 11,
**caractérisé en ce que** les éléments d'émission optiques de la première (19) et de la deuxième (21) unité de récepteur/émetteur sont conçus en tant qu'éléments d'émission optiques économiques, de préférence en tant que lasers à bande large.

13. Multiplexeur à insertion/extraction selon la revendication 12,
**caractérisé en ce que** les éléments d'émission optiques de la première (19) et de la deuxième (21) unité de récepteur/émetteur fonctionnent à une puissance inférieure à celle des éléments d'émission optiques de la première (45) et/ou de la deuxième (47) unité transpondeur à longueurs d'onde utiles.
